# EUROPEAN PATENT APPLICATION

(11) **EP 4 443 566 A1**
(43) Date of publication of application: **09.10.2024**
(21) Application number: 24163552.3
(22) Date of filing: 14.03.2024
(51) Int. Cl.: H01M 4/86, H01M 4/92, C25B 1/04, C25B 11/052, C25B 11/067, C25B 11/081

(54) **SELECTIVE ELECTROCHEMICAL REDOX CATALYST WITH SCHOTTKY CONJUNCTION**

(30) Priority: 03.04.2023 KR 20230043384
(71) Applicant: POSTECH Research and Business Development Foundation, Pohang-si, Gyeongsangbuk-do 37673 (KR)
(72) Inventor: You, Sang Hoon, 47110 Busanjin-gu, Busan (KR); Kim, Yong Tae, 37673 Pohang-si, Gyeongsangbuk-do (KR)
(74) Representative: Gulde & Partner

(57) **Abstract**

The present invention relates to an electrochemical catalyst with a Schottky junction that can be used for selective redox reactions, more specifically, it is configured to forming a Schottky contact on the interface between metals, and metal oxides operating as a semiconductor material to selectively occur oxidation or reduction reactions through Schottky barrier control. Accordingly, the present invention ensures that substantially only oxidation reactions occur in the anode of a fuel cell or a water electrolyzer, while substantially only reduction reactions occur in the cathode and, thereby, has the effects of preventing catalyst degradation and increasing durability.

## Description

### TECHNICAL FIELD

The present invention relates to an electrochemical catalyst with a Schottky junction that can be used for oxidation or reduction reactions selectively, more specifically, it is configured to forming a Schottky contact on the interface between metals, and metal oxides operating as a semiconductor material to occur oxidation or reduction reactions selectively through Schottky barrier control. Accordingly, the present invention ensures that substantially only oxidation reactions occur in the anode of a fuel cell or a water electrolyzer, while substantially only reduction reactions occur in the cathode and, thereby, has the effects of preventing catalyst degradation and increasing durability.

### BACKGROUND

Electrocatalysts are utilized in a wide array of applications including water electrolysis technology for generating green hydrogen, which is crucial for a hydrogen-based economy; fuel cell technology that generates electricity using water electrolysis as a foundation; and CO₂ reduction technology that directly decreases CO₂ emissions. Research on electrocatalysis is also active, with the majority of research focusing on the activity, durability, or economics of catalysts. For example, there is already a vast body of literature on modifying catalyst structures to increase the active surface area and, as a result, enhance performance, exploring alloy materials for greater stability, reducing the quantity of precious metals, or achieving cost savings through the development of non-precious metal catalysts.

However, research on the selectivity of catalysts has been quite limited despite the necessity for further research due to its significant impact on the durability of fuel cells and water electrolyzers. In fuel cells, the Hydrogen Oxidation Reaction (HOR), a reaction in which hydrogen undergoes oxidation, and the Oxygen Reduction Reaction (ORR), a reaction in which oxygen undergoes reduction, take place at the Anode and Cathode poles, respectively. In electrolyzers, the Oxygen Evolution Reaction (OER), a reaction in which oxygen is produced, and the Hydrogen Evolution Reaction (HER), a reaction in which hydrogen is produced, occur simultaneously at the Anode and Cathode poles, respectively. However, the characteristic of electrochemical catalysis, where oxidation/reduction reactions occur in pairs, sometimes leads to issues when they unintentionally occur in reverse as reduction/oxidation reactions.

For instance, in the Start-Up/Shut-Down (SU/SD) scenario of a fuel cell, the unintended ORR (Oxygen Reduction Reaction) occurs due to the ingress of external air into the anode, causing the potential at the opposite cathode pole to rise above 1.4V. Consequently, a Carbon Oxidation Reaction (COR) takes place on the cathode side, resulting in catalyst degradation. Furthermore, during shutdown of the electrolyzer, the residual voltage induces the oxidation reaction of the cathode electrode by dissolved oxygen crossed over to the cathode. In this manner, contrary to the intended reaction design, reduction reactions occur at the anode, while oxidation reactions occur at the cathode, leading to catalyst deterioration.

Research on selective catalysts has primarily been conducted in the field of gas sensor systems, including photocatalysis. When it comes to electrocatalysis, the focus has been on the selectivity of competitive reactions, such as the yield of CO from CO₂ conversion or the rate of H₂O₂ generation in the two-electron reaction of the ORR. However, since the introduction of selective HOR research by Markovic's group, it has gradually been referred to as the selectivity of the reaction itself. In this study, aimed at enhancing catalyst durability under fuel cell Start-Up/Shut-Down (SU/SD) conditions, an organic material called Calix[4]arene was adsorbed onto the Pt surface using the Self-Assembled Monolayer (SAM) technique. This allowed for the selective inhibition of substantially only ORR activity while preserving HOR activity.

In addition, there has been a successful attempt to achieve HOR (Hydrogen Oxidation Reaction) selectivity using Dodecanethiol. However, the inherent thermal and electrochemical instability of organic materials has been a critical drawback, making their practical application challenging. Drawing inspiration from the control of electrical properties through rectification at heterojunctions, a concept often used in semiconductor research, we sought to overcome the limitations of organics. We did this by harnessing the Metal-Insulator Transition (MIT) phenomenon that occurs when a metal catalyst is bonded to an oxide support. Using platinum as the metal catalyst and tungsten oxide as the oxide support, we achieved selectivity that enhances oxidation reactions in fuel cells while suppressing reduction reactions. This research gained recognition for its outstanding performance, being featured as the cover paper of Nature Catalysis in 2020, and is regarded as top-tier research in the field of electrocatalyst selectivity. On the other hand, addressing the issue of catalyst durability during shutdown situations in electrolyzers has only been explored relatively recently, compared to research on fuel cell Start-Up/Shut-Down (SU/SD) conditions. Consequently, finding solutions, including related research, remains challenging.

Similar studies have been reported using Iridium-based bifunctional alloy catalysts. However, these studies cannot be compared to commercial catalysts in terms of performance retention, and their economic feasibility is hindered by the high cost of Iridium (Ir).

From this perspective, the inventors of the present invention recognized the necessity of research on selective catalysts to address the issue of catalyst durability in fuel cells and electrolyzers. Particularly, while examining metal oxides from a semiconductor standpoint, they made an intriguing discovery. They found that electrochemical redox reactions can occur selectively through the control of Schottky barriers, a more generalized approach than the MIT (Metal-Insulator Transition) phenomenon. This led to the establishment of the mechanism behind metal-oxide catalyst selectivity, prompting the need for the development of electrochemical catalysts for selective redox reactions in the form of Schottky junctions.

In this context, prior patents 1 and 2 disclosed a method for producing a three-dimensional metal catalyst electrode coated with a co-catalyst suitable for electrochemical carbon dioxide reduction. However, they do not specifically provide a electrochemical catalyst with a Schottky junction for selective redox reactions or a method for producing such a catalyst. Furthermore, they do not offer a catalyst suitable for application in fuel cells or water electrolyzers. Therefore, these patents still fall short of fulfilling the development requirements as described above.

### (Prior Arts)

Prior Patent 1: Korean Registered Patent No. 10-1784626 (registered on September 27, 2017)
Prior Patent 2: Korean Registered Patent No. 10-1771368 (registered on August 18, 2017)

### SUMMARY

The present invention is introduced to address the issues and limitations of previous inventions. The task at hand for this invention is to offer an electrochemical catalyst with a Schottky junction that can induce electrochemical redox reactions selectively at the cathode and anode catalysts in fuel cells and electrolyzers. This allows reactions to occur at each pole, preventing catalyst degradation due to side reactions during stopping and starting situations, thereby enhancing durability.

The objectives of this invention are not confined to those mentioned earlier, and additional issues not stated here will be evident to individuals with general knowledge in the technical field from the following description.

Accordingly, the electrochemical catalyst with a Schottky junction for selective redox reactions, as described in one embodiment of the present invention, is comprised of a support layer having semiconductor material and a catalyst layer including metal formed on the support's surface to establish a Schottky junction state, wherein it operates exclusively as a catalyst for reduction reactions when the semiconductor material is of the n-type and functions solely as a catalyst for oxidation reactions when the semiconductor material is of the p-type.

In this case, if the semiconductor material forming the support is p-type, it has a work function value greater than that of the metal forming the catalyst layer. Conversely, if the semiconductor material forming the support is n-type, it has a work function value lower than that of the metal forming the catalyst layer.

Generally, when a metal catalyst is supported on a metal oxide support, it results in the formation of the similar interface to when a metal is in contact with a semiconductor. The characteristic of this interface, whether Schottky contact or Ohmic contact, depends on the relative magnitudes of the work functions of the two substances and the type of semiconductor, whether n-type or p-type. Schottky contact occurs when the work function value (Φ_{M}) of the metal is greater than that of the semiconductor (Φ_{S}) and the semiconductor is n-type. Conversely, Schottky contact occurs when the work function value (Φ_{M}) of the metal is lower than that of the semiconductor (Φ_{S}) and the semiconductor is p-type. In all other cases, Ohmic contact is established.

When considering only the Schottky Contact condition and excluding Ohmic Contact, where electron movement does not occur, we observe that each type of semiconductor, whether n-type or p-type, exhibits a specific current direction. If we interpret this current direction as electron transfer in a catalytic reaction, it becomes evident that when the semiconductor is of the n-type, substantially only a reduction reaction can occur, as electrons are transferred from the support to the catalyst. Conversely, when the semiconductor is of the p-type, substantially only an oxidation reaction can take place, as electrons are transferred from the catalyst to the support. Therefore, by harnessing this phenomenon, it becomes possible to manufacture a selective electrochemical redox catalyst capable of inducing substantially only the desired type of oxidation or reduction reaction.

On the other hand, the selective redox catalyst in the form of a Schottky junction, as presented in one embodiment of the present invention, is constructed by simply supporting a metal that serves as a catalyst on the surface of a semiconductor acting as a supporter. Notably, the material forming the catalyst layer is platinum, chosen due to its versatility as a catalyst in both HOR (Hydrogen Oxidation Reaction) and ORR (Oxygen Reduction Reaction) within fuel cells. Furthermore, to account for the quantum size effect, it's essential to utilize nanoscale-level materials that possess properties akin to typical bulk materials. Ideally, platinum particles with a size of 1.2 nm or larger are preferred.

Meanwhile, the semiconductor material used as a support have to maintain stability under strongly acidic conditions with a pH of 1, considering its exposure to highly acidic electrolytes in fuel cells. To meet the Schottky Contact condition, a p-type semiconductor material should be selected as the support for HOR, ensuring that substantially only oxidation reactions occur. Conversely, an n-type semiconductor material should be chosen for ORR to exclusively facilitate reduction reactions. To adhere to the Schottky Contact condition, the support should consist of a p-type semiconductor material with a work function value higher than platinum's (Pt) work function value of 5.65 eV, and an n-type semiconductor material with a work function value lower than that of platinum.

After thorough exploration of semiconductor materials that satisfy these criteria, it was determined that tin oxide (SnO₂) serves as the n-type semiconductor material, while cobalt oxide (Co₃O₄) is the preferred choice for the p-type semiconductor material. Cobalt oxide was selected for its role as the p-type semiconductor material to selectively maintain the Hydrogen Oxidation Reaction (HOR) at the anode of fuel cells. This selection is attributed to its stability at pH 1 and its work function value of 6.3 eV, which exceeds platinum's work function value of 5.65 eV. Additionally, tin oxide was chosen as an n-type semiconductor material to selectively sustain the Hydrogen Evolution Reaction (HER) at the cathode of a water electrolyzer due to its stability at pH 1 and its work function of 4.9 eV, which is lower than platinum's work function of 5.65 eV.

In constructing the electrochemical catalyst for the Schottky junction type selective redox reaction according to one embodiment of the present invention, the thickness of the catalyst layer made of platinum is 5 nm, and the thickness of the cobalt oxide, a p-type semiconductor material forming the support layer, is preferably 15 to 30 nm.

On the other hand, in constructing an electrochemical catalyst for a selective redox reaction in the form of a Schottky junction according to one embodiment of the present invention, it is preferred that the thickness of the catalyst layer made of platinum is 3 to 7 nm, and the thickness of the tin oxide, an n-type semiconductor material forming the support layer, is 50 nm.

Specific details of other embodiments are included in the detailed description and drawings.

Thus, according to the present invention, a Schottky contact is occurred at the interface of the platinum catalyst and the semiconductor material so that electrons flow substantially only in one direction, and optionally, substantially only oxidation or reduction reactions are induced to occur. Therefore, side reactions that may occur at each pole of the fuel cell and the electrolyzer can be minimized, which has a significant effect of solving the problem of deterioration of durability that may occur during start-up and shut-down of the fuel cell or electrolyzer.

The effects of the present invention are not limited to those mentioned above, and other effects not mentioned will be apparent to one of ordinary skill in the art from the following description.

### BRIEF DESCRIPTION OF THE DRAWINGS

Embodiments of the present invention will be more clearly understood from the following detailed description taken in conjunction with the accompanying drawings in which:
FIG. 1 shows a schematic that illustrates the operating mechanism of an electrochemical catalyst with a Schottky junction for selective redox reactions according to an embodiment of the present invention.
FIG. 2 is a graph comparing the effectiveness of a Schottky junction-type selective oxidation reaction catalyst comprising platinum and cobalt oxide as a fuel cell catalyst according to an embodiment of the present invention.
FIG. 3 shows a graph comparing the effectiveness of a Schottky junction-type selective reduction catalyst comprising platinum and tin oxide in a catalyst for water electrolysis according to an embodiment of the present invention.
FIG. 4 depicts a graph illustrating constant voltage measurements conducted for Pt, Co₃O₄, and Pt/Co₃O₄ in an environment simulating hydrogen oxidation (HOR) and oxygen reduction (ORR) conditions according to embodiments of the present invention.
FIG. 5 provides data on measured work functions for different reactions of Pt/Co₃O₄ according to an embodiment of the present invention.
FIG. 6 shows data regarding the measured work function for different reactions of Pt/SnO₂ in accordance with an embodiment of the present invention.

### DETAILED DESCRIPTION OF THE EMBODIMENTS

Embodiments of the present disclosure will now be described in more detail with reference to the accompanying drawings. However, the technology disclosed herein is not limited to the embodiments described herein and may be embodied in other forms. Rather, the embodiments described herein are provided so that the disclosure is thorough and complete and so that the ideas of the present application may be fully conveyed to those skilled in the art. In the drawings, the dimensions, such as width and thickness, of the components of each apparatus are somewhat enlarged in order to clearly represent them.

In addition, only a portion of a component has been illustrated for ease of description, but those skilled in the art will readily recognize the remainder of the component. Throughout, the drawings are described from an observer's point of view, and where an element is referred to as being located above or below another element, this is intended to include both the sense that said element may be located directly above or below the other element, or that additional elements may be interposed between them.

Furthermore, one of ordinary skill in the art will be able to implement the ideas of the present application in various other forms without departing from the technical ideas of the present application. And, in the plurality of drawings, like designations refer to substantially the same elements.

In addition, singular expressions should be understood to include plural expressions unless the context clearly indicates otherwise, and the terms include or have are intended to specify the presence of the features, numbers, steps, actions, components, parts, or combinations thereof described, and not to preclude the possibility of the presence or addition of one or more other features, numbers, steps, actions, components, parts, or combinations thereof.

Further, in carrying out the method or method of manufacture, the steps comprising the method may occur in a different order from that specified unless the context clearly indicates a particular order, i.e., the steps may occur in the same order as specified, may be performed substantially simultaneously, or may be performed in reverse order.

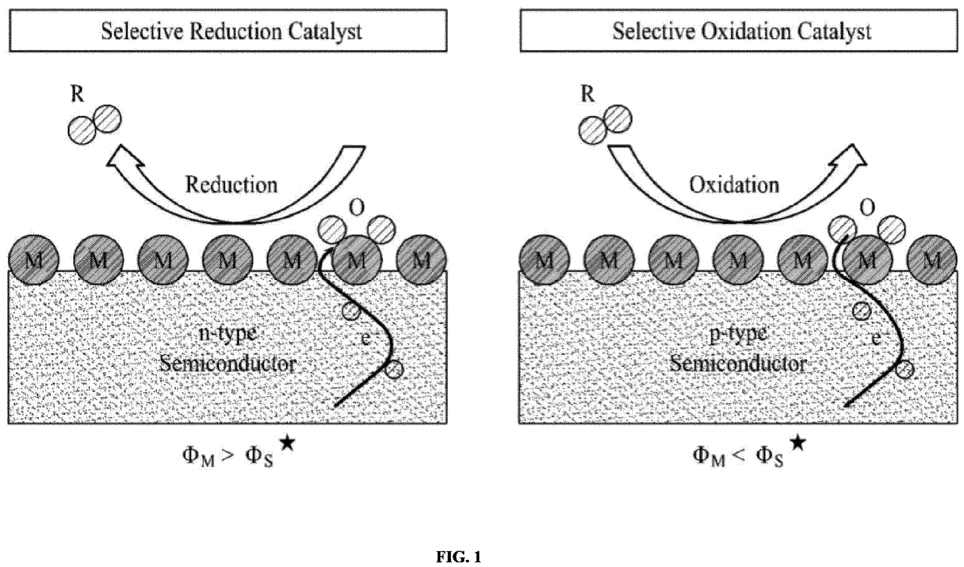

FIG. 1 illustrates the operating mechanism of the electrochemical catalyst for selective redox reactions in the form of a Schottky junction according to the present invention.

The electrochemical catalyst according to the present invention is structured as a simple supporting of a metal, serving as a catalyst, on the surface of a semiconductor material, which acts as a supporter.

As depicted in the right-hand illustration in FIG. 1, for catalysts designed for selective oxidation reactions, electron transfer has to occur from the metal to the semiconductor material. Therefore, a p-type semiconductor material should be adopted as the semiconductor material, and its work function value should exceed that of the metal catalyst.

On the other hand, as shown in the left-hand illustration of FIG. 1, catalysts intended for selective reduction reactions require electron transfer from the semiconductor material to the metal. Hence, an n-type semiconductor material should be chosen, and the work function value of the metal catalyst should surpass that of the n-type semiconductor material.

In an exemplary embodiment of the present invention, platinum (Pt), commonly used in both HOR (Hydrogen Oxidation Reaction) and ORR (Oxygen Reduction Reaction), has been selected as the metal catalyst. For the oxidation reaction, HOR, occurring at the anode of a fuel cell, a p-type semiconductor material is adopted as the supporter to exclusively facilitate oxidation reactions. Conversely, for the reduction reaction, ORR, an n-type semiconductor material is employed as the supporter to solely enable reduction reactions. The semiconductor material used as the supporter must maintain stability under strongly acidic conditions with a pH of 1, considering its exposure to highly acidic electrolytes. Furthermore, Schottky contact conditions need to be established, thus a p-type semiconductor material with a work function value higher than that of the catalyst material, platinum (Pt), which has a work function value of 5.65 eV, should be chosen as the supporter. Additionally, an n-type semiconductor material with a work function value lower than the work function value of platinum (Pt) should be selected as the supporter.

In the case of this Schottky junction-type electrochemical catalyst for selective redox reactions, semiconductor materials were deposited onto glassy carbon rods using the Physical Vapor Deposition (PVD) technique, followed by sequential deposition of platinum (Pt) onto the surface of the semiconductor materials.

Example 1 : We manufactured a selective oxidation reaction catalyst for fuel cells designed to induce substantially only the oxidation reaction at the anode. Using the PVD technique, cobalt oxide (Co₃O₄), a p-type semiconductor material, was deposited on glassy carbon rods with thicknesses of 50, 30, and 15 nm, respectively. Following this, platinum (Pt), a metal material, was deposited on the surface with a thickness of 5 nm, respectively.

As a control group, we chose a catalyst prepared by directly depositing platinum (Pt) with a thickness of 5 nm on glassy carbon rods. This configuration was made to confirm the catalyst configuration conditions under which it can effectively function as a Schottky junction-type selective oxidation catalyst.

Example 2 : We manufactured a selective reduction reaction catalyst for a water electrolyzer, designed to induce substantially only the reduction reaction at the cathode. Once again, we used the PVD technique to deposit tin oxide (SnO₂), an n-type semiconductor material, on glassy carbon rods with a consistent thickness of 50 nm, followed by platinum (Pt) deposition with a thickness of 7 nm. As a control group, we selected a catalyst prepared by depositing platinum (Pt) alone on glassy carbon rods with a thickness of 7 nm. This configuration allows us to verify the catalyst configuration conditions under which it can effectively serve as a Schottky junction-type selective reduction catalyst.

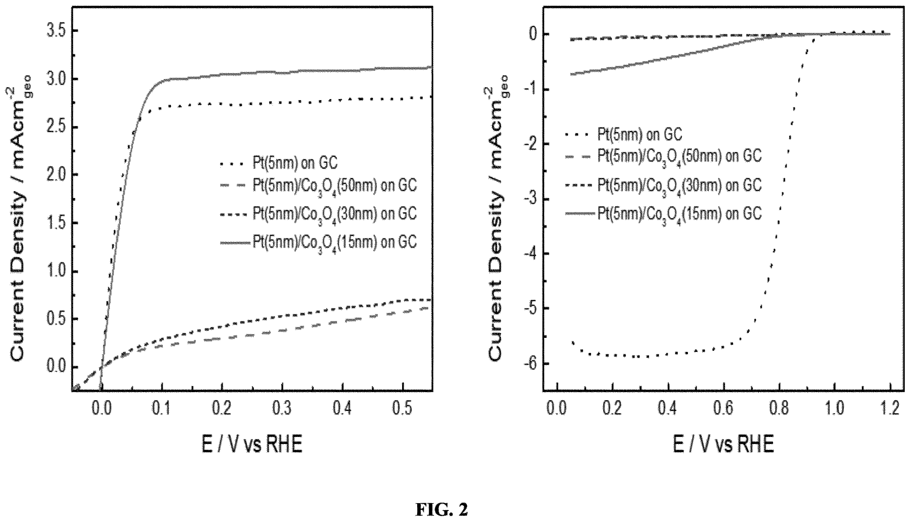

FIG. 2 illustrates graphs comparing the performance of a Schottky junction-type selective oxidation catalyst including platinum and cobalt oxide as a catalyst for fuel cells.

Examining the HOR and ORR activity graphs of the Pt/Co₃O₄ catalysts produced in accordance with Example 1, we observed that thinner Co₃O₄ deposition led to improved performance, particularly in terms of HOR activity. However, for samples with Co₃O₄ deposition exceeding 30 nm, the conductivity became too low to yield meaningful results. This can be attributed to the dominance of the semiconductor properties of the metal oxide in excessively thick Co₃O₄ layers, hindering electron transfer across the band barrier formed at the Schottky contact. The sample deposited with a 15 nm thickness, considered suitable, exhibited performance similar to that of bare Pt catalysts in HOR activity. Conversely, results from ORR evaluation indicated that Co₃O₄ deposition at 30 nm or greater resulted in low conductivity, and even at 15 nm, activity dropped significantly compared to bare Pt. These contrasting outcomes for the oxidation and reduction reactions of Pt/Co₃O₄ confirm that selective oxidation reaction catalysis is achieved under real experimental conditions.

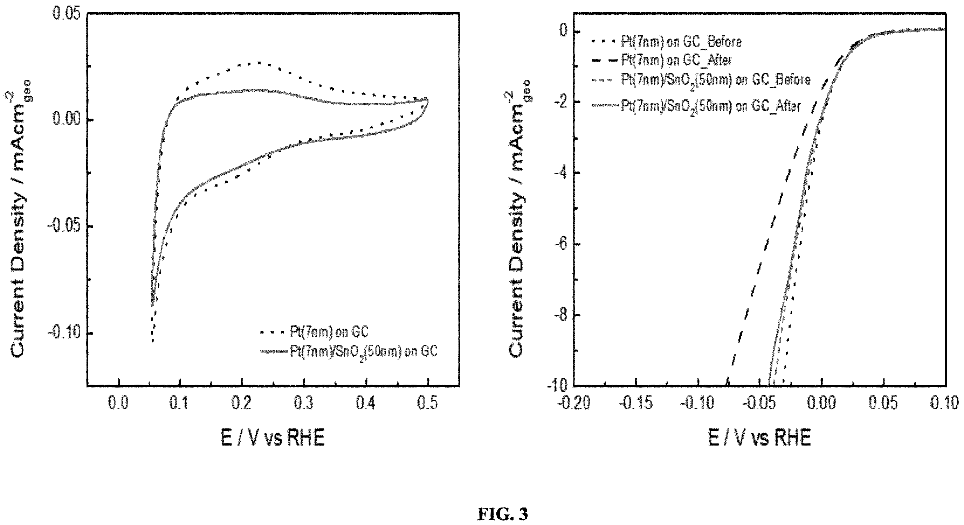

FIG. 3 displays graphs comparing the performance of a Schottky junction-type selective reduction catalyst composed of platinum and tin oxide as a catalyst for electrolyzers.

An embodiment was prepared by depositing SnO₂ as an n-type semiconductor material on a glassy carbon rod with a deposition thickness of 50 nm, followed by sequential deposition of platinum (Pt) as a metal catalyst material with a thickness of 7 nm. A control catalyst, containing platinum catalyst directly deposited on glassy carbon with a thickness of 7 nm (Pt/GC), was also prepared. Both catalysts were adopted for the water electrolyzer, and conditions before and after the shutdown test were compared.

As observed in the CV graph on the left of FIG 3, the hydrogen adsorption HUPDs, representing reduction current density, were formed similarly regardless of SnO₂ deposition. However, the oxidation peak was only present in the catalyst using platinum catalyst alone (Pt/GC), without SnO₂, confirming that the oxidation reaction is suppressed, and the reduction reaction occurs selectively in the catalyst composed by adopting tin oxide as an n-type semiconductor material (Pt/SnO₂ on GC).

As shown in the HER graph on the right in FIG. 3, prior to the shutdown test in the water electrolyzer, the presence of SnO₂ exhibited similar initial activity to Pt/GC (Before data), indicating no issues with the supply of reduction current.

However, when we examine the results after the shutdown test in the water electrolyzer (After data), we observed that the HER overpotential at 10 mA/cm² did not change significantly considering that the control Pt/GC increased by 2.4 times (32→78 mV), whereas the selective reduction reaction catalyst Pt/SnO₂ in Example 2 only increased by about 1.1 times (39→43 mV). Therefore, based on these experimental results, it is evident that the selective reduction reaction catalyst employing tin oxide (SnO₂) as an n-type semiconductor in Example 2 enhances the catalyst's durability by suppressing oxidation current supply under the shutdown conditions of the electrolyzer.

Further experiments were conducted to evaluate the effectiveness of the present invention.

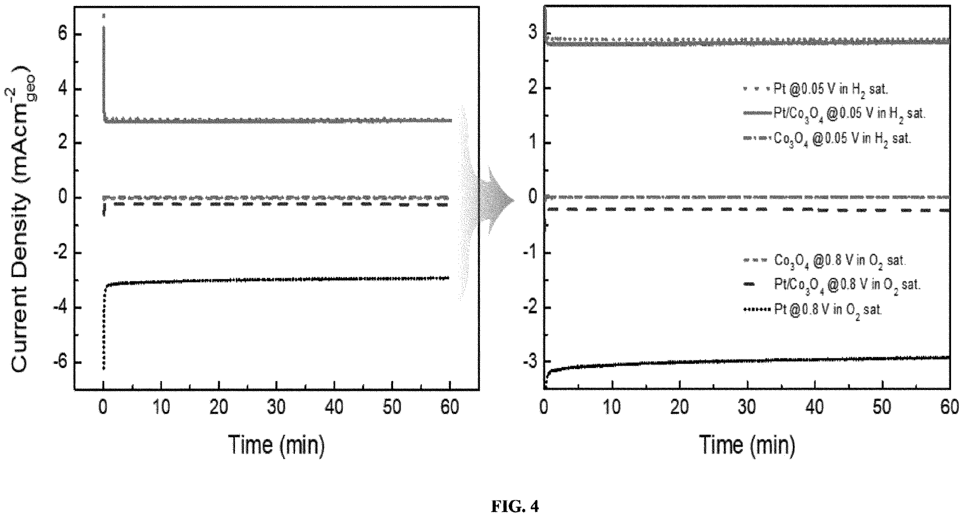

Figure 4 displays constant voltage measurements for Pt, Co₃O₄, and Pt/Co₃O₄ in conditions simulating hydrogen oxidation (HOR) and oxygen reduction (ORR). At the HOR condition of 0.05 V and H₂ saturation, both Pt and Pt/Co₃O₄ exhibited high currents, except for Co₃O₄, which behaves more like a conductor.

Under ORR conditions at 0.8 V and O₂ saturation, Co₃O₄ still showed very low currents, Pt maintained high currents, while Pt/Co₃O₄ displayed low currents similar to Co₃O₄. Through this, we were able to confirm a selective pattern of action where reduction currents are suppressed, and mostly oxidation currents are actively conducted.

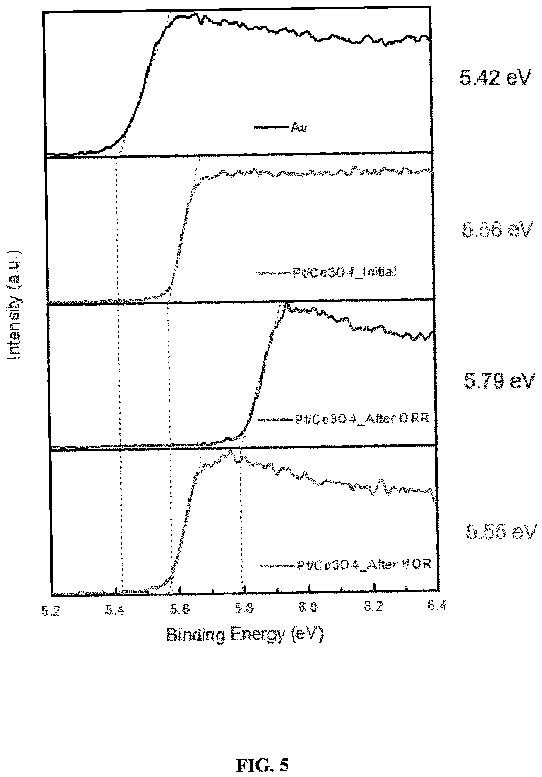

In Figure 5, direct measurements of the work function for each reaction of Pt, Co₃O₄ and Pt/Co₃O₄, are presented. The Initial sample, taken immediately after deposition, and the sample after HOR exhibited similar work functions. However, the sample after ORR showed an increased work function. This supports the idea that substantially only the reduction reaction, ORR, increases the Schottky Barrier, consequently hindering the current flow in case of Pt, Co₃O₄ and Pt/Co₃O₄.

The conductivity between these planes is shown in Table 1 below.

**(Table 1)**

| | **Conductivity (S cm¹)** | **Mobility (cm² V¹ s¹)** | **Carrier density (cm³)** |
|---|---|---|---|
| **Pt** | 6.99 × 10⁴ | 2.35 × 10³ | 1.86 × 10²⁰ |
| **Co₃O₄** | 2.93 × 10⁻³ | 7.73 × 10² | 2.37 × 10¹³ |
| **Pt/Co₃O₄ (Oxidation)** | 6.15 × 10⁴ | 2.07 × 10³ | 1.85 × 10²⁰ |
| **Pt/Co₃O₄ (Reduction)** | 8.57 × 10⁻¹ | 1.76 × 10³ | 3.04 × 10¹⁵ |

When Pt/Co₃O₄ is exposed to an oxidation reaction as a selective oxidation catalyst, the conductivity closely resembles that of Pt. However, when subjected to a reduction reaction, the conductivity decreases by a factor of 10⁵.

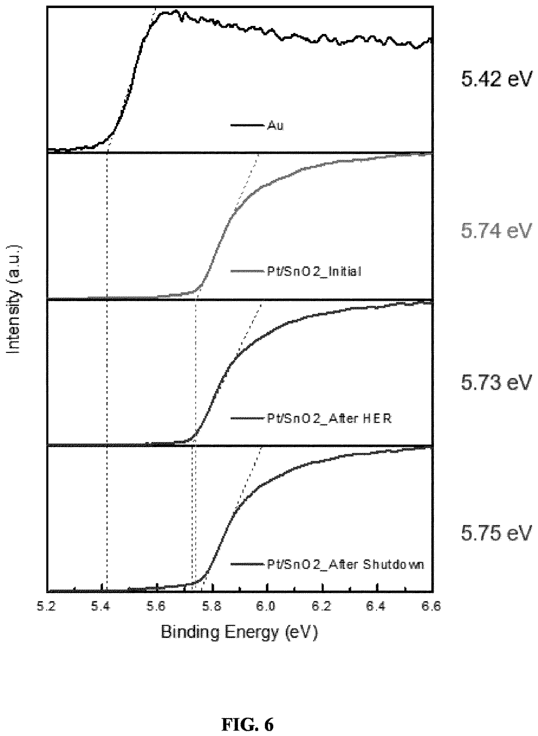

Figure 6 presents data measuring the work function for various reactions of Pt, SnO₂ and Pt/SnO₂ in accordance with an embodiment of the present invention. Compared to Pt/Co₃O₄, Pt/SnO₂ exhibits relatively similar work functions across different samples.

However, among these, the work function is notably larger in the order of HER < Initial < Shutdown. When transitioning through HER, a reduction reaction, the work function experiences a slight decrease compared to the Initial state, immediately after deposition. In contrast, following the shutdown, which involves an oxidation reaction, the Schottky barrier increases, supporting the hindrance of current.

Therefore, in accordance with the present invention, a Schottky contact is established at the interface between the platinum catalyst and the semiconductor material, allowing electrons to flow in only one direction. This facilitates the selective occurrence of either oxidation or reduction reactions. As a result, potential side reactions that may take place at the poles of fuel cells and electrolyzers can be minimized, providing a substantial solution to the issue of durability deterioration that may occur during the startup and shutdown of these devices.

Additionally, it's worth noting that while the invention has been described through specific embodiments and drawings, it is not limited to these examples. Those with ordinary knowledge in the relevant field can make various modifications and adaptations based on this description. Therefore, the scope of the invention should not be confined to the described embodiments but should be determined by the patent claims that follow, as well as by equivalents thereof.

## Claims

1. A Schottky junction-type electrochemical catalyst comprising:
a support layer including a semiconductor material; and
a catalyst layer including a metal formed on the support layer,
wherein the support layer and the catalyst layer are formed in a Schottky junction state, and
wherein the semiconductor material functions substantially as a reduction catalyst for when the semiconductor material is n-type, and substantially as a oxidation catalyst when the semiconductor material is p-type.

2. The Schottky junction-type electrochemical catalyst of claim 1, wherein the semiconductor material included in the support layer has a work function value greater than the work function value of the metal included in the catalyst layer if the semiconductor material included in the support layer is p-type, and
wherein the semiconductor material included in the support layer has a work function value smaller than the work function value of the metal included in the catalyst layer if the semiconductor material included in the support layer is n-type.

3. The Schottky junction-type electrochemical catalyst of claim 1, wherein the metal included in the catalyst layer is platinum.

4. The Schottky junction-type electrochemical catalyst of claim 3, wherein the platinum includes platinum particles having a size of 1.2 nm or more.

5. The Schottky junction-type electrochemical catalyst of claim 4, wherein the semiconductor material of the n-type is tin oxide (SnO₂ ) and the semiconductor material of the p-type is cobalt oxide (Co₃O₄ ).

6. The Schottky junction-type electrochemical catalyst of claim 5, wherein the thickness of the catalyst layer of the platinum is 5nm and the thickness of the semiconductor material of the p-type of the support layer, is 15 to 30nm, and
wherein the Schottky junction-type electrochemical catalyst functions as a selective oxidation catalyst.

7. The Schottky junction-type electrochemical catalyst of claim 5, the thickness of the catalyst layer of the platinum is 7nm and the thickness of the semiconductor material of the n-type of the support layer, is 50nm, and
wherein the Schottky junction-type electrochemical catalyst functions as a selective reduction catalyst.
